(19) Europäisches Patentamt
European Patent Office
Office européen des brevets

(11) Publication number: **0 455 154 B1**

(12) **EUROPEAN PATENT SPECIFICATION**

(45) Date of publication of patent specification: **20.09.95**

(51) Int. Cl.$^6$: **C08F 8/04**, C08C 19/02, B01J 31/24

(21) Application number: **91106770.0**

(22) Date of filing: **26.04.91**

(54) **Polymer hydrogenation process using ruthenium complexes.**

(30) Priority: **01.05.90 CA 2015804**

(43) Date of publication of application:
**06.11.91 Bulletin 91/45**

(45) Publication of the grant of the patent:
**20.09.95 Bulletin 95/38**

(84) Designated Contracting States:
**DE FR GB IT**

(56) References cited:
**DE-A- 3 541 689**
**DE-A- 3 921 264**
**US-A- 4 631 315**
**US-A- 4 812 528**
**US-A- 4 816 525**

(73) Proprietor: **UNIVERSITY OF WATERLOO**
**Waterloo,**
**Ontario N2L 3G1 (CA)**

(72) Inventor: **Rempel, Garry L.**
**54 Thorndale Drive**
**Waterloo,**
**Ontario, N2L 4Y7 (CA)**
Inventor: **McManus, Neil T.**
**8-400 Albert Street**
**Waterloo,**
**Ontario, N2L 3V3 (CA)**
Inventor: **Mohammadi, Narvoz**
**1318 Spartan Avenue**
**Sarnia,**
**Ontario, N7V 4B5 (CA)**

(74) Representative: **von Kreisler, Alek, Dipl.-Chem. et al**
**Patentanwälte**
**von Kreisler-Selting-Werner**
**Postfach 10 22 41**
**D-50462 Köln (DE)**

**EP 0 455 154 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the selective hydrogenation of the carbon-carbon double bonds in a copolymer of a conjugated diene and one or more copolymerizable monomers using a particular catalyst.

Several homogeneous and heterogeneous processes based on rhodium or palladium metal catalysts have been proposed and are now being used to hydrogenate carbon-carbon double bonds in acrylonitrile-butadiene copolymers and other similar polymers.

For example, FR-2,421,923-C discloses the partial hydrogenation of the double bonds in acrylonitrile-butadiene rubber (NBR) over a palladium/charcoal catalyst.

DE-3,046,008-A discloses the selective hydrogenation of the double bonds in conjugated diene containing polymers such as NBR, wherein the catalyst is palladium and at least one other element on a support which may be silica, alumina or activated carbon.

DE-3,046,251-A discloses a similar process except that the catalyst support is channel or furnace carbon black.

GB-2,070,023A discloses a process for the selective hydrogenation of the double bonds in unsaturated organic polymers such as acrylo-nitrile-butadiene-styrene polymers, when in the form of an aqueous emulsion, using a catalyst such as chloro-tris(triphenylphosphine)rhodium in a hydrocarbon solution.

U S 3,898,208-C describes a process for hydrogenation of latexes of oil-insoluble polymers of conjugated dienes. The latex is dispersed in a swelling agent for the polymer and hydrogenated in the presence of a catalyst complex which may be a rhodium complex catalyst, such as chlorotris-(triphenylphosphine)rhodium. The swelling agent must also be a solvent for the catalyst complex.

U S 3,700,637-C discloses that the double bonds in alternating copolymers of conjugated dienes and unsaturated nitriles may be hydrogenated using catalysts which preferably are homogeneous rhodium halide complex catalysts having the formula $L_3RhX$ wherein X is halogen and L is an organophosphorus or organoarsenic stabilizing ligand. It is also preferred that an excess of the ligand be used during the hydrogenation, the mole ratio of ligand to rhodium complex being between about 10:1 and about 150:1.

GB-1,558,491-C discloses the hydrogenation of the double bonds in copolymers of a conjugated diene and an $\alpha$, $\beta$-unsaturated carboxylic acid or derivative thereof, for example acrylonitrile, using as catalyst a homogeneous monovalent or trivalent rhodium halide complex of the formula $L_3RhX_n$ wherein X is chlorine or bromine, n is 1 or 3, and L is a ligand. An additional 5 to 25 weight percent, based on the copolymer of the ligand may optionally be used. The amount of hydrogenation is highly solvent dependent.

U S 3,480,659-C describes a process for the selective hydrogenation of double bonds in unsaturated monomers containing 2 to 20 carbon atoms using a homogeneous rhodium hydride complex catalyst, for example, hydridotetrakis(triphenylphosphine)rhodium, along with an excess of a complexing ligand, for example triphenylphosphine. The mole ratio of ligand to catalyst is between about 10:1 and about 150:1.

IT-912,648-C discloses that cycloalkadienes and alkadienes may be selectively hydrogenated to the corresponding cycloalkenes and alkenes using a catalyst, such as hydridotetrakis(triphenylphosphine)-rhodium.

More recently, there issued U S 4,464,515-C and 4,503,196-C in which one of the inventors herein, Rempel, is named as an inventor. U S 4,464,515-C describes the hydrogenation of carbon-carbon double bonds in copolymers of conjugated dienes and copolymerizable monomers in the presence of a monovalent rhodium hydride complex of the formula $RhHL_{1x}$ in which x is 3 or 4 and $L_1$ is a first ligand, a second ligand compound $L_2$ and a solvent for the compound. U S 4,503,196-C describes the selective hydrogenation in the absence of added ligand and in the presence of monovalent rhodium hydride complex of the formula $RhHL_x$, where, when x is 4, L is a phosphorus compound which is 5-phenyl-5H-dibenzophosphole or a compound of formula $PR_1R_2R_3$ or, when x is 3, L is an arsenic or antimony compound of the formula $MR_1R_2R_3$,wherein M is arsenic or antimony, and wherein $R_1$, $R_2$ and $R_3$ are selected from $CH_3$, $C_2H_5$, $C_{6-10}$ aryl groups and $C_{7-12}$ aralkyl groups.

The advantage of the processes described in the latter two patents is that improved rates of hydrogenation are achieved under relatively mild conditions and that the degree of hydrogenation is relatively insensitive to the amount of solvent used.

However, rhodium is an expensive metal and hence we made an investigation to look for an efficient but cheaper hydrogenation process based on other catalyst materials.

In U S 4,631,315-C, there is described the hydrogenation of nitrile group-containing polymers in a low molecular weight ketone as a solvent using certain ruthenium catalysts having the formula:

$$RuX[(L_1)(L_2)_n]$$

wherein X represents hydrogen or halogen, $L_1$ represents hydrogen, halogen or optionally substituted cyclopentadienyl, $L_2$ represents phosphine, bisphosphine or arsine, n is 1, 2 or 3 and $[(L_1)(L_2)_n]$ represents a cyclopentadienyl bisphosphine. The data presented in this patent suggests that free ligand is necessary to achieve acceptable reaction rates.

In DE-3,529,252-A, there is also described the hydrogenation of nitrile group-containing polymers in a low molecular weight ketone using other ruthenium catalysts, this time of the formula:

$RuH_m(COOR_1)_n(L)_p$

wherein $R_1$ is an alkyl, aryl, cycloalkyl or aralkyl, L represents phosphine or arsine, m is 0 or l, n is 1 or 2 and p is 2 or 3.

In addition, there has previously been described in U S 4,816,525-C effecting selective hydrogenation of the carbon-carbon double bonds in a copolymer of a conjugated diene and at least one copolymerizable monomer in the presence of a divalent carbonyl ruthenium complex selected from the group consisting of:

(a) a ruthenium complex of the general formula:

$Ru(CO)HA(Z)_3$

wherein A is a halogen atom or a hydrogen atom, Z is a $-PR_1R_2R_3$ group in which $R_1$, $R_2$ and $R_3$ may be the same or different and are selected from alkyl and aryl groups, and

(b) a ruthenium complex of the general formula:

$Ru(CO)XY(Z)_2$

wherein X is a carboxylate group, Y is a halogen atom, a carboxylate group or a hydrogen atom, and Z is as defined above.

In U S 4,812,528-C such hydrogenation is described as being effected in the presence of a divalent nitrosyl ruthenium complex selected from the group consisting of:

(c) a ruthenium complex of the general formula:

$Ru\ T(CO)(NO)(Z)_2$

wherein T is a halogen atom and Z is as defined above,

(d) a ruthenium complex of the general formula:

$Ru\ T(NO)(Z)_2$

wherein T and Z are as defined above,

(e) a ruthenium complex of the general formula:

$Ru\ H(NO)(Z)_3$

wherein Z is as defined above, and

(f) a ruthenium complex of the general formula:

$Ru\ (NO)_2(Z)_2$

wherein Z is as defined above.

Both U S 4,816,525-C and 4,812,528-C name one of the inventors herein, Rempel, as a coinventor and are assigned to University of Waterloo, the applicant herein.

It has now surprisingly been found that selective hydrogenation of the carbon-carbon double bonds in a copolymer of a conjugated diene and one or more copolymerizable monomers may be effected using at least one divalent ruthenium complex of the general formula:

$RuXY(CO)ZL_2$ -(1)

or

$RuX(NO)(CO)L_2$ -(2)

wherein X is a halogen atom or a carboxylate group, Y is a halogen atom, a hydrogen atom, a phenyl group, a carboxylate group, or a phenylvinyl group, Z is CO, pyridine, benzonitrile, trimethylphosphite or no ligand, and L is a phosphine ligand having at least one bulky alkyl substituent the term "bulky alkyl substituent" meaning with respect to phosphines, substituents which cause the phosphine cone angle to be at least 160 °C.

Such ruthenium complexes have not previously been described as useful in polymer hydrogenation reactions. The advantages that these ruthenium complexes have over the ruthenium carbonyl complexes described in the prior U.S. patents referred to above, are (1) far superior rates of hydrogenation to those observed for other ruthenium complexes, permitting catalyst loadings to drop as low as 0.02% whilst using high polymer loadings of as high as 30%, (2) no isomerization is observed in contrast to other ruthenium catalysts, and (3) a decrease and usually virtual elimination of gel formation resulting from an undesired cross-linking reaction, particularly in the hydrogenation of acrylonitrile-butadiene copolymers. It is theorized that the bulky substituent group(s) on the phosphine ligand blocks the interaction of more than one polymer molecule at the metal center, thereby decreasing the likelihood of polymer cross-linking and increasing catalyst activity.

Accordingly, the present invention provides a process for the selective hydrogenation of the carbon-carbon double bonds in a copolymer of a conjugated diene and at least one copolymerizable monomer, which is characterized by effecting the hydrogenation in the presence of at least one divalent ruthenium carbonyl complex of the general formula:

$RuXY(CO)ZL_2$ -(1)

or

$RuX(NO)(CO)L_2$ -(2)

wherein X, Y, Z and L are as defined above.

Essential to the present invention is the effecting of selective hydrogenation of carbon-carbon double bonds in NBR, styrene-butadiene rubber and similar copolymers of conjugated dienes and copolymerizable monomers, using particular ruthenium complexes containing carbonyl, phosphine and halogen or carboxylate ligands.

One class of the ruthenium carbonyl complexes used in the present invention has the general formula:

$RuXY(CO)ZL_2$ -(1)

Another class of the ruthenium carbonyl complexes used in the present invention has the general formula:

$RuX(NO)(CO)L_2$ -(2)

In these formulae, X is a halogen atom, preferably a chlorine or bromine atom, more preferably a chlorine atom, or a carboxylate group corresponding to the formula $R_4COO$-.

The carboxylate group $R_4COO$- may comprise alkyl or aryl carboxylate groups. Specific preferred carboxylate groups are mono-, di- or tri-halo substituted acetate, including $ClCH_2COO$-, $Cl_2CHCOO$-, $Cl_3CCOO$- and $F_3CCOO$-, unsubstituted acetate i.e., $CH_3COO$-, unsubstituted benzoate i.e., $C_6H_5COO$-, alkyl substituted benzoate, including p-$CH_3C_6H_4COO$- and halo-substituted benzoate, including p-$ClC_6H_4COO$-.

In the above formula (1), Y may be a halogen atom, preferably a chlorine or bromine atom, more preferably a chlorine atom, a hydrogen atom, a phenyl group, a carboxylate group corresponding to the formula $R_4COO$, preferably PhCOO-, or a phenylvinyl group, i.e.,

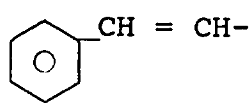

In the above formula (1), Z is carbonyl, pyridine or no ligand. Accordingly, specific subclasses of such compounds comprise:

$RuXY (CO)_nL_2$ -(3)

where n is 1 or 2; and

$RuXY (CO)(py)L_2$ -(4)

where py is pyridine.

In the above formulae (1) and (2), L is a phosphine ligand of the formula $-PR_1R_2R_3$ in which the groups $R_1$, $R_2$ and $R_3$ may be the same or different and include at least one bulky alkyl substituent. The term "bulky alkyl substituent" is used herein to mean, with respect to phosphines, substituents which cause the phosphine cone angle, as defined by Tolman (see Chem. Rev. 77 (1977), 313) to be at least 160°. Preferred bulky alkyl substituents include cyclohexyl, isopropyl, tert-butyl, sec-butyl and benzyl.

It is preferred but not essential for all three of the groups $R_1$, $R_2$ and $R_3$ to be bulky alkyl substituents to achieve the greatest gel-formation suppression effect. However, one or two of such groups may comprise the bulky alkyl substituent. In most circumstances, the other(s) of the $R_1$, $R_2$ and $R_3$ groups may be any convenient alkyl and/or aryl group, preferably selected from methyl, ethyl, $C_6$ to $C_{10}$ aryl groups and $C_7$ to $C_{12}$ aralkyl groups.

Specific ruthenium catalyst are selected from carbonylchlorohydrido bis(tricyclohexylphosphine) ruthenium (II), carbonylchlorohydridopyridyl bis(tricyclohexylphosphine) ruthenium (II), carbonylchlorohydridobenzonitrile bis(tricyclohexylphosphine) ruthenium (II), carbonylchlorohydridotrimethylphosphite bis(tricyclohexylphosphine) ruthenium (II), carbonylacetatohydrido bis(tricyclohexylphosphine) ruthenium (II), carbonylchloroacetatohydrido bis(tricyclohexylphosphine) ruthenium (II), carbonylbenzoatohydrido bis-(tricyclohexylphosphine) ruthenium (II), carbonyldichlorobis (tricyclohexylphosphine) ruthenium (II), carbonylchloro(phenylvinyl) bis(tricyclohexylphosphine) ruthenium (II), biscarbonylchlorohydrido bis-(tricyclohexylphosphine) ruthenium (II), carbonylchlorohydrido bis(tri-isopropylphosphine) ruthenium (II), carbonylacetatohydrido bis(tri-isopropylphosphine) ruthenium (II), carbonylchlorobenzoato bis-(tricyclohexylphosphine) ruthenium (II), carbonylchlorophenyl bis(tricyclohexylphosphine) ruthenium (II) and carbonylchloronitrosyl bis(tricyclohexylphosphine) ruthenium (II).

None of the ruthenium complexes of the above formulae (1) and (2) are disclosed or suggested in the prior art as useful to effect selective hydrogenation of carbon-carbon double bonds in copolymers of a conjugated diene and one or more copolymerizable monomers. The only prior art of which the applicant is aware which discloses ruthenium complexes for such a purpose are the aforementioned U S 4,631,315-C DE-3,529,252-A and U S 4,816,525-C and 4,812,528-C. In comparison to formulae (1) and (2), this prior art does not disclose the use of complexes containing the phosphine ligands having bulky alkyl substituents employed in the present invention in such hydrogenation processes.

Preparative procedures for the formation of the ruthenium complexes having phosphine ligands containing bulky alkyl substituents used in the present invention are described generally in the literature, for example, by Moers et al, Rec. Trav. Pays Bas, 91 (1972), 591; Johnson et al, J. Chem. Soc. Dalton, (1973), 478; James et al, Adv. in Chem. Ser., 196 (1982), 145; Esteruelas et al, J. Organomet. Chem., 303 (1986), 221; Gill et al, Inorg. Chim. Acta., 32, (1979), 19; and Moers et al, J. Inorg. and Nuc. Chem. Lett., 36, (1974), 2279.

Apart from the simple coordination chemistry, little has been reported of the chemistry of the ruthenium complexes of formulae (1) and (2).

In the present invention, the ruthenium complex of formula (1) or (2) is used to effect selective hydrogenation of carbon-carbon double bonds in copolymers of a conjugated diene and one or more copolymerizable monomers. Such copolymers may be random, alternating or of block structure. Suitable conjugated dienes include $C_4$ to $C_6$ conjugated dienes, such as butadiene, isoprene, dimethylbutadiene and piperylene. Suitable copolymerizable monomers include acrylonitrile and methacrylonitrile, alkenylaromatic hydrocarbons, such as styrene and α-methylstryene, and C3 to C6 α, β-unsaturated mono- or polycarboxylic acids, such as itaconic, fumaric, maleic, acrylic and methacrylic acids.

Preferred copolymers to which the present invention may be applied include butadiene-(meth)-acrylonitrile copolymers, isoprene-(meth)acrylonitrile copolymers, copolymers of butadiene with (meth)-acrylonitrile and at least one monomer selected from itaconic acid, fumaric acid, (meth)acrylic acid and maleic acid, and AB, ABA and ABCBA block copolymers wherein A is butadiene or isoprene, B is styrene or α- methylstyrene and C is a coupling agent residue, and from 30 to 99.95 percent of said carbon-carbon

double bonds are hydrogenated.

The selective hydrogenation is effected in any convenient manner in a solvent for the copolymer containing the catalyst. The copolymer is dissolved in the solvent and the resulting solution is degassed. The reaction vessel containing the copolymer solution is pressurized with hydrogen gas and the catalyst is added to and dissolved in the solution. Alternatively, the catalyst is added to and dissolved in the copolymer solution and then the reaction vessel may be pressurized with hydrogen. The reaction vessel is rapidly heated to the desired temperature and agitation is initiated. The hydrogenation reaction is allowed to proceed for the desired length of time with the hydrogen pressure preferably held constant. Upon completion of the hydrogenation reaction, the hydrogenated copolymer may be recovered by any convenient method.

The reaction vessel is pressurized with gaseous hydrogen, usually from 0.5 to 10 MPa and preferably 2.5 to 7.0 MPa. It is preferred to employ pure hydrogen but hydrogen containing small amounts of inert gases, such as nitrogen, also may be used.

The hydrogenation reaction usually is effected at a temperature of 80 °C to 200 °C, preferably 110 °C to 160 °C. Under the preferred conditions of temperature and pressure, essentially complete hydrogenation of the carbon-carbon double bonds may be achieved in about 2 to about 9 hours, depending on the catalyst, temperature and pressure used. By using suitable conditions of time and temperature, it is possible to obtain copolymers which are only partially hydrogenated. The degree of hydrogenation may be adjusted to suit the requirements for the product required.

The concentration of ruthenium complex catalyst employed in the hydrogenation process usually ranges from 0.02 to 2 wt.% of copolymer. The ruthenium catalyst used herein does not appear to cause the undesirable isomerization of the $\Delta$ 4,5-unsaturated nitrile bonds to the stable $\alpha$, $\beta$-unsaturated nitrile moiety which is observed with the previously-described ruthenium complexes, so that higher polymer loadings may be employed. The polymer concentration may range from 1 to 30 wt.% of the reaction mixture.

As previously mentioned, the employment of carbonyl ruthenium complexes having phosphine ligands containing bulky alkyl substituents in the present invention inhibits gel formation and hence the addition of gel formation-inhibiting ligand component described in the aforementioned U S 4,816,525-C and 4,812,528-C, is eliminated or at least minimized.

The solvent used in the process of the present invention may be any organic solvent in which the copolymer and catalyst are soluble and which is not adversely affected by the hydrogenation conditions. Suitable solvents include aryl hydrocarbons and their alkyl and halo derivatives, such as benzene, toluene, xylene, chlorobenzene and dichlorobenzene, or aliphatic ethers, such as tetrahydrofuran and dioxane, or ketones, such as methylethylketone (MEK) and acetone. When employed, MEK is reduced to some extent to 2-butanol under the reaction conditions used but this does not interfere with the desired hydrogenation of the copolymer. Mixed solvents also may be used, in which one component is a low molecular weight ketone and the other is a hydrocarbon solvent, for example, methyl ethyl ketone and chlorobenzene in a volume ratio ranging from 1:10 to 10:1.

The hydrogenation products of the process of the invention are vulcanizable elastomers, the vulcanizates of which may be used in applications requiring resistance to oxidizing conditions at elevated temperatures for extended periods of time, for example, the various hoses and seals used in the engine compartment of an automobile.

The hydrogenated copolymers may be vulcanized using conventional peroxide or peroxide/sulfur curing systems. It is preferred to use vulcanizates in which from 30 to 99.95 percent, more preferably from 95 to 99.95 percent, and most preferably about 99 to 99.95 percent of the carbon-carbon double bonds in the copolymer have been hydrogenated.

One embodiment of the process of the present invention involves a homogeneous hydrogenation process wherein the hydrogenation is carried out with copolymer and catalyst dissolved in the solvent in a stainless steel autoclave. The copolymer may be dissolved in the organic solvent and the resulting solution purged, degassed and pressured with hydrogen gas. The reaction vessel is heated rapidly to the desired temperature, agitation initiated followed by catalyst addition. Upon completion of the reaction, the hydrogenated copolymer may be recovered by any convenient method well known in the art. For example, the reaction mixture may be mixed with an alcohol or contacted with hot water and/or steam in order to precipitate the copolymer which is then separated, washed if desired, and dried e.g., under vacuum. If desired the catalyst may be recovered by the method described in U S 3,545,963-C.

The invention is illustrated by the following Examples:

Example 1

Samples of $RuHCl(CO)(PCyH_3)_2$ were prepared for testing in hydrogenation reactions by these procedures:

(a) Tricyclohexylphosphine ($PCyH_3$) was reacted with $RuCl_3.nH_2O$ in refluxing methoxyethanol in the presence of $NaBH_4$, in accordance with the procedure of James et al referred to above. Pure product (i.e., $RuHCl(CO)(PCyH_3)_2$) was obtained in good yield in about a 2 hour reaction time. This catalyst Example was used in all the runs reported below, except as indicated.

(b) Tricyclohexylphosphine was reacted with $RuCl_3.nH_2O$ in refluxing methoxyethanol, in accordance with the procedure of Moers et al referred to above. In this case a long reaction time (48 hours) was required. In an attempt to improve on this preparation tricyclohexylphosphine was reacted with $RuCl_3.nH_2O$ and formaldehyde solution in methoxyethanol for about 18 hours and a mixture of $RuHCl(CO)(PCyH_3)$ and $RuHCl(CO)_2(PCyH_3)_2$ was obtained. This mixture was used as the catalyst in some of the runs reported below.

(c) Tricyclohexylphosphine, $RuCl_3.nH_2O$ and triethylamine were heated under reflux in methoxyethanol for 2 to 8 hours. Only about 3 mole equivalents of $PCyH_3$ with respect to ruthenium were required when utilizing this procedure and the desired product was produced in good yield (75 to 85%).

Example 2

Studies of hydrogenation were carried our using chlorobenzene solutions of an acrylonitrile-butadiene copolymer containing 62 percent butadiene and sold under Krynac® 38.50 rubber by NOVA Petrochemicals Inc., unless otherwise noted below. All reactions were carried out in a stainless steel autoclave fitted with a glass liner.

The reaction conditions employed, quantities of reactants employed and the results obtained are set forth in the following Table I:

**TABLE I**

Hydrogenation of NBR rubbers using $RuHCl(CO)(PCyH_3)_2$ as Catalyst

| Run No. | Reaction Temp. °C | Polymer Conc.[a] | Catalyst Conc.[b] | Total Pressure (psi) MPA | Reaction Time/h | Percentage Hydrogenation |
|---|---|---|---|---|---|---|
| 1 | 140 | 1.5 | 1.2[c] | (600) 4,1 | 0.5 | 99+ |
| 2 | 140 | 1.5 | 0.6[c] | (600) 4,1 | 1 | 99+ |
| 3 | 140 | 5.0 | 0.6[c] | (600) 4,1 | 1.5 | 99+ |
| 4 | 140 | 5.0 | 0.2[c] | (800) 5,5 | 2 | 99+ |
| 5 | 140 | 5.0 | 0.1[c] | (800) 5,5 | 2 | 99+ |
| 6 | 140 | 5.0 | 0.1 | (800) 5,5 | 2 | 99+ |
| 7 | 140 | 5.0 | 0.1 | (600) 4,1 | 3 | 99+ |
| 8 | 140 | 5.0 | 0.05[c] | (800) 5,5 | 4 | 99+ |
| 9 | 140 | 5.0 | 0.05 | (800) 5,5 | 4 | 99+ |
| 10 | 140 | 7.5 | 0.1 | (800) 5,5 | 2.5 | 99+ |
| 11 | 140 | 7.5 | 0.1 | (600) 4,1 | 3.5 | 99+ |
| 12 | 140 | 7.5 | 0.05 | (800) 5,5 | 4.5 | 99+ |
| 13 | 140 | 7.5 | 0.03 | (800) 5,5 | 10 | 99+ |
| 14 | 140 | 1.5[d] | 0.5 | (600) 4,1 | 2 | 99+ |
| 15 | 140 | 1.5[e] | 0.5 | (600) 4,1 | 1 | 99+ |
| 16 | 140 | 1.5[f] | 0.5 | (600) 4,1 | 3 | 99+ |
| 17 | 150 | 5.0 | 0.1 | (800) 5,5 | 1.8 | 99+ |
| 18 | 155 | 8.6 | 0.04 | (600) 4,1 | 6 | 99+ |
| 19 | 155 | 8.6 | 0.06 | (600) 4,1 | 5 | 99+ |
| 20 | 155 | 8.6 | 0.08 | (600) 4,1 | 2 | 99+ |
| 21 | 155 | 6.4 | 0.04 | (600) 4,1 | 5 | 99+ |
| 22 | 155 | 6.4 | 0.04 | (900) 6,2 | 3.5 | 99+ |
| 23 | 155 | 6.4 | 0.04 | (1200) 8,2 | 3 | 99+ |
| 24 | 155 | 8.8 | 0.08 | (625) 4,3 | 2.5 | 99+ |
| 25 | 155 | 12.0 | 0.06 | (625) 4,3 | 5 | 99+ |
| 26 | 155 | 12.0 | 0.04 | (625) 4,3 | 4.5 | 99+ |
| 27 | 155 | 12.0 | 0.02 | (625) 4,3 | 7 | 99+ |
| 28 | 135 | 4.3 | 0.08 | (600) 4,1 | 3 | 99+ |
| 29 | 145 | 4.3 | 0.08 | (600) 4,1 | 3 | 99+ |
| 30 | 155 | 4.3 | 0.08 | (600) 4,1 | 3 | 99+ |
| 31 | 155 | 8.6 | 0.06 | (600) 4,1 | 5 | 99+ |
| 32 | 165 | 8.6 | 0.06 | (600) 4,1 | 4 | 99+ |

| | | | | | | |
|---|---|---|---|---|---|---|
| 33 | 155 | 10.0[g] | 0.09 | (1000) 6,9 | 4 | 99+ |
| 34 | 145 | 13.9[g] | 0.05 | ( 800 ) 5,5 | 6 | 99+ |
| 35 | 150 | 20.0[g] | 0.05 | (1000) 6,9 | 3.5 | 99+ |
| 36 | 160 | 33.0[g] | 0.05 | (1200) 8,2 | 6 | 99+ |
| 37 | 150 | 30.0[h] | 0.05 | (1000) 6,9 | 10 | 99+ |
| 38 | 140 | 5.0[f] | 0.1 | ( 800) 5,5 | 24 | 0[i] |
| 39 | 140 | 5.0[f] | 0.1 | ( 800) 5,5 | 3 | 99+[j] |
| 40 | 140 | 5.0[k] | 0.1 | (800) 5,5 | 4 | 97.5 |
| 41 | 140 | 5.0[k] | 0.1 | ( 800) 5,5 | 6 | 99+ |
| 42 | 140 | 5.0[l] | 0.1 | ( 800) 5,5 | 24 | 99+ |
| 43 | 140 | 5.0[l] | 0.1 | ( 800) 5,5 | 6 | 99+ |
| 44 | 140 | 5.0[l] | 0.1 | ( 800) 5,5 | 6 | 99+ |

Notes

a: Weight percent w.r.t. to total weight of solution in chlorobenzene
b: Weight percent w.r.t. weight of copolymer.
c: Catalyst used was mixture of $RuHCl(CO)(PCyH_3)_2$ and $RuHCl(CO)_2(PCyH_3)_2$.
d: Krynac 38.50 rubber was dissolved in toluene.
e: Copolymer was a carboxylated acrylonitrile-butadiene copolymer containing 66 percent butadiene and sold under Krynac® 110c rubber by Polysar Ltd.
f: Copolymer used was a carboxylated acrylonitrile-butadiene copolymer containing 67.5 percent butadiene and sold under Krynac® 221 rubber by NOVA Petrochemicals Inc.
g: Krynac 38.50 rubber was dissolved in 2 butanone.
h: Krynac 38.25 rubber was dissolved in 2-butanone.
i: Copolymer was impure
j: Copolymer was purified prior to hydrogenation
k: Copolymer used was a carboxylated acrylonitrile-butadiene copolymer containing 67.5 percent butadiene and sold under the trademark Krynac K231 by NOVA Petrochemicals Inc.
l: Copolymer used was a carboxylated acrylonitrile-butadiene copolymer containing 68.5 percent butadiene are sold under the trademark XC976 by NOVA Petrochemicals Inc.

As may be seen from the results presented in Table I, greater than 99% hydrogenation of the copolymer was achieved under widely varying reaction conditions of polymer and catalyst concentrations. The rates of reaction observed are much greater than observed for other ruthenium complexes as described in the aforementioned U S 4,816,525-C and 4,812,528-C.

No compounds besides the copolymer, catalyst and chlorobenzene or alternate solvent were included in the reaction mixture and no gel formation or any carbon-carbon double bond isomerization was observed in any of the runs.

Both standard NBR polymer and carboxylated ones are rapidly hydrogenated in the presence of the catalyst, although the rates are slower in the latter case, with quantitative hydrogenation being achieved, except for runs 38 and 40. It is thought that an impurity in the rubber killed the catalyst in run 38. The problem was cured by initially purifying the rubber, as seen in run 39.

Run 40 was terminated at 4 hours since the I.R. spectrum of the sample indicated 99% hydrogenation. However, an $^1H$ NMR spectrum of isolated polymer showed only 97.5% hydrogenation. Increasing the reaction time, as in run 41, enabled quantitative hydrogenation to be achieved.

Example 3

Additional complexes of formula 1 were prepared, as follows:

(a) $RuHCl(CO)(PCyH_3)_2$ prepared as described in Example 1(a) was reacted with various sodium carboxylate salts to yield $RuH(RCO_2)(CO)(PCyH_3)_2$ where $R = CH_3$, $CH_2Cl$ or Ph.

(b) The complex $RuCl_2(CO)(PCyH_3)_2$ was isolated free from $RuHCl(CO)(PCyH_3)_2$ by reacting $RuCl_3.nH_2O$ and $PCyH_3$ in refluxing methanol for about 5 hours.

(c) $RuHCl(CO)_2(PCyH_3)_2$ was prepared by reaction of $RuHCl(CO)(PCyH_3)_2$ prepared as described in Example 1(c) with carbon monoxide.

(d) $RuCl(CH=CH(Ph))(CO)(PCyH_3)_2$ was prepared by reaction of $RuHCl(CO)(PCyH_3)_2$ prepared as described in Example 1(d) with phenylacetylene.

(e) The complex $RuHCl(CO)(P^iPr_3)_2$ was prepared using the procedure of Esteruelas et al described above by heating $RuCl_3.nH_2O$ and $P^iPr_3$ in methanol for 18 hours. The acetate-containing analog of this complex, $RuH(CH_3CO_2)(CO)(P^iPr_3)_2$, was prepared by reacting with sodium acetate.

(f) The complex $RuCl(Ph)(CO)(PCyH_3)_2$ was prepared by reaction of $RuHCl(CO)(PCyH_3)_2$ with diphenyl mercury in refluxing toluene. This method was originally used by Roper and Wright, J. Organomet. Chem., 142 (1977), Cl to synthesize $RuCl(Ph)(CO)(PPh_3)_2$ from $RuHCl(CO)(PPh_3)_3$.

(g) The complex $RuHCl(CO)(py)(PCyH_3)_2$ was prepared by treating a solution of $RuHCl(CO)(PCyH_3)_2$ in toluene with pyridine at room temperature for 24 hours, following the procedure of Moers and Langhout, Rec. Trav. Pays Bas, 91 (1972), 591. The complex was obtained as an off white solid which was quite stable in air and apparently insoluble in solvents, such as toluene and chloroform.

(h) In the procedure (g), $P(OMe)_3$ and PhCN were substituted for pyridine to produce the corresponding trimethylphosphite- and benzonitrile- containing complex.

Example 4

The activities of the complexes prepared in Example 3 and others produced by similar procedures, towards hydrogenation of Krynac® 38.50 rubber were tested following the procedure of Example 2. The complexes employed, reaction conditions employed, quantities of reactants employed and the results obtained are set forth in the following Table II:

TABLE II

Hydrogenation of Krynac 38.50 rubber using Ruthenium Complexes as Catalysts

| Run[a] No. | Catalyst Formula | conc[b] | Polymer conc[c] | Total Press(psi) MPA | Reaction Time/h | Percentage Hydrogenation |
|---|---|---|---|---|---|---|
| 45 | $RuCl_2(CO)(PCyH_3)_2$ | 0.5 | 1.5 | (600) 4,1 | 1.5 | 99+ |
| 46 | $RuCl_2(CO)(PCyH_3)_2$ | 0.1 | 5 | (800) 5,5 | 5 | 99+ |
| 47 | $RuH(CH_3CO_2)(CO)(PCyH_3)_2$ | 0.5 | 1.5 | (600) 4,1 | 1.5 | 99+ |
| 48 | $RuH(CH_3CO_2)(CO)(PCyH_3)_2$ | 0.1 | 5 | (800) 5,5 | 3 | 99+ |
| 49 | $RuH(PhCO_2)(CO)(PCyH_3)2$ | 0.5 | 1.5 | (600) 4,1 | 2 | 99+ |
| 50 | $RuH(PhCO_2)(CO)(PCyH_3)_2$ | 0.1 | 5 | (800) 5,5 | 3.25 | 99+ |
| 51 | $RuH(ClCH_2CO_2)(CO)(PCyH_3)_2$ | 0.1 | 5 | (800) 5,5 | 4 | 99+ |
| 52 | $RuHCl(CO)_2(PCyH_3)_2$ | 0.1 | 5 | (800) 5,5 | 4 | 99+ |
| 53 | $RuCl(R^{d})(CO)(PCyH_3)_2$ | 0.5 | 1.5 | (600) 4,1 | 2 | 99+ |
| 54 | $RuHCl(CO)(P^{i}Pr_3)_2$ | 0.5 | 1.5 | (600) 4,1 | 1 | 99+ |
| 55 | $RuHCl(CO)(P^{i}Pr_3)_2$ | 0.01 | 1.5 | (600) 4,1 | 2.5 | 99+ |
| 56 | $RuHCl(CO)(P^{i}Pr_3)_2$ | 0.1 | 5 | (800) 5,5 | 2 | 99+ |
| 57 | $RuHCl(CO)(P^{i}Pr_3)_2$ | 0.1 | 7.5 | (800) 5,5 | 3.2 | 99+ |
| 58 | $RuH(CH_3CO_2)(CO)(P^{i}Pr_3)_2$ | 0.5 | 1.5 | (600) 4,1 | 1.4 | 99+ |
| 59 | $RuH(CH_3CO_2)(CO)(P^{i}Pr_3)_2$ | 0.1 | 5 | (800) 5,5 | 2.5 | 99+ |
| 60 | $RuCl(CO)(PhCO_2)(PCyH_3)_2$ | 0.5 | 1.5 | (600) 4,1 | 2 | 99+ |
| 61 | $RuCl(CO)(PhCO_2)(PCyH_3)_2$ | 0.1 | 5 | (800) 5,5 | 5 | 99+ |
| 62 | $Ru(Ph)Cl(CO)(PCyH_3)_2$ | 0.5 | 1.5 | (600) 4,1 | 1.3 | 99+ |
| 63 | $Ru(Ph)Cl(CO)(PCyH_3)_2$ | 0.1 | 5 | (800) 5,5 | 2 | 99+ |
| 64 | $Ru(Ph)Cl(CO)(PPh_3)_2$ | 0.5 | 1.5 | (600) 4,1 | 0.5 | 60[e] |
| 65 | $RuCl(NO)(CO)(PCyH_3)_2$ | 0.5 | 1.5 | (600) 4,1 | 8 | 99+ |
| 66 | $RuCl(NO)(CO)(PCyH_3)_2$ | 0.1 | 5 | (800) 5,5 | 7 | 99+ |
| 67 | $RuHCl(CO)(py)(PCyH_3)_2$ | 0.1 | 5 | (800) 5,5 | 2 | 99+ |
| 68[f] | $RuHCl(CO)(py)(PCyH_3)_2$ | 0.05 | 10 | (800) 5,5 | 4 | 99+ |
| 69 | $RuHCl(CO)(P(OMe)_3)(PCyH_3)_2$ | 0.5 | 1.5 | (600) 4,1 | 3 | 99+ |
| 70[f] | $RuHCl(CO)(P(OMe)_3)(PCyH_3)_2$ | 0.05 | 10 | (800) 5,5 | 6 | 99+ |
| 71 | $RuHCl(CO)(PhCN)(PCyH_3)_2$ | 0.1 | 5 | (800) 5,5 | 2 | 99+ |
| 72[f] | $RuHCl(CO)(PhCN)(PCyH_3)_2$ | 0.05 | 10 | (800) 5,5 | 4 | 99+ |

Notes

a: Reaction temperatures were 140°C, unless noted.

b: Weight percent w.r.t. weight of polymer.

c: Weight percent w.r.t. total weight of solution.

d: R is CH=CH(Ph).

e: Gel formed.

f: Reaction temperature was 145°C.

As may be seen from Table II, as in the case of Example 2, enhanced hydrogenation activity was observed as compared to other known ruthenium complexes, greater than 99% conversion was achieved and again no gel formation or carbon-carbon double bond isomerization was evident. Gel formation occurred with run 64, where a bulky alkyl substituent was not used.

In summary of this disclosure, the present invention provides a novel process for effecting hydrogenation of carbon-carbon double bond unsaturation in conjugated diene copolymers using certain ruthenium complexes.

## Claims

1. A process for the selective hydrogenation of the carbon-carbon double bonds in a copolymer of a conjugated diene with at least one copolymerizable monomer, characterized by effecting said hydrogenation in the presence of at least one divalent ruthenium catalyst of the general formula:

   $RuXY(CO)ZL_2$ -(1)

   or

   $RuX(NO)(CO)L_2$ -(2)

   wherein X is a halogen atom or a carboxylate group, Y is a halogen atom, a hydrogen atom, a phenyl group, a carboxylate group, or a phenylvinyl group, Z is CO, pyridine, benzonitrile, trimethylphosphite or no ligand, and L is a phosphine ligand having at least one bulky alkyl substituent, the term "bulky alkyl substitutent" meaning, with respect to phosphines, substituents which cause the phosphine cone angle to be at least 160°.

2. The process claimed in claim 1, wherein X is a chlorine or a bromine atom or a carboxylate group of the formula $R_4COO$- in which $R_4$ is selected from alkyl and aryl groups.

3. The process claimed in claim 2, wherein X is a chlorine atom or a carboxylate group which is an unsubstituted acetate, mono, di- and tri-halo substituted acetate, unsubstituted benzoate, alkyl-substituted benzoate or halo-substituted benzoate.

4. The process claimed in any one of claims 1 to 3, wherein the carboxylate groups are $C1CH_2COO$-, $C1_2CCHCOO$-, $F_3CCOO$-, $CH_3COO$-, $C_6H_5COO$-, p-$CH_3C_6H_4COO$- or p-$C1C_6H_4COO$-.

5. The process claimed in any one of claims 1 to 4, wherein Y is a chlorine atom, a hydrogen atom, a phenyl group or an $R_4COO$- group in which $R_4$ is selected from alkyl and aryl groups.

6. The process claimed in any one of claims 1 to 5, wherein L is a phosphine ligand of the formula -$PR_1R_2R_3$in which at least one of $R_1$, $R_2$ and $R_3$ is a bulky alkyl group.

7. The process claimed in claim 6, wherein each of $R_1$, $R_2$ and $R_3$ is a bulky alkyl group.

8. The process claimed in claim 6 or 7, wherein said bulky alkyl group is selected from cyclohexyl, isopropyl, tert- butyl, sec-butyl and benzyl.

9. The process claimed in any one of claims 1 to 8, wherein said ruthenium catalyst is selected from carbonylchlorohydrido bis(tricyclohexylphosphine) ruthenium (II), carbonylchlorohydridopyridyl bis-(tricyclohexylphosphine) ruthenium (II), carbonylchlorohydridobenzonitrile bis(tricyclohexylphosphine) ruthenium (II), carbonylchlorohydridotrimethylphosphite bis(tricyclohexylphosphine) ruthenium (II), carbonylacetatohydrido bis(tricyclohexylphosphine) ruthenium (II), carbonylchloroacetatohydrido bis-(tricyclohexylphosphine) ruthenium (II), carbonylbenzoatohydrido bis(tricyclohexylphosphine) ruthenium (II), carbonyldichlorobis (tricyclohexylphosphine) ruthenium (II), carbonylchloro(phenylvinyl) bis-(tricyclohexylphosphine) ruthenium (II), biscarbonylchlorohydrido bis(tricyclohexylphosphine) ruthenium (II), carbonylchlorohydrido bis(tri-isopropylphosphine) ruthenium (II), carbonylacetatohydrido bis(tri-isopropylphosphine) ruthenium (II), carbonylchlorobenzoato bis(tricyclohexylphosphine) ruthenium (II), carbonylchlorophenyl bis(tricyclohexylphosphine) ruthenium (II) and carbonylchloronitrosyl bis-

(tricyclohexylphosphine) ruthenium (II).

**10.** The process claimed in any one of claims 1 to 9, wherein said hydrogenation is effected at an applied hydrogen pressure of 0.5 to 10 MPa at a temperature of 80° to 200°C.

**11.** The process claimed in claim 10, wherein said pressure is 2.5 to 7.0 MPa and said temperature is 110° to 160°C.

**12.** The process claimed in any one of claims 1 to 11, carried out in solvent which is chlorobenzene, o-dichlorobenzene, benzene, toluene, 2-butanone or acetone.

**13.** The process claimed in any one of claims 1 to 11, carried out in a solvent comprising a mixture of a low molecular weight ketone and a hydrocarbon solvent.

**14.** The process claimed in claim 13, wherein said solvent mixture comprises a mixture of methyl ethyl ketone and chlorobenzene in a volume ratio of about 1:10 to about 10:1.

**15.** The process claimed in any one of claims 1 to 14, carried out in a solvent at a catalyst concentration of 0.02 to 2 wt.% of copolymer and at a copolymer concentration of 1 to 30 wt.%.

**16.** The process claimed in any one of claims 1 to 15, wherein said copolymer is selected from the group consisting of butadiene-(meth)- acrylonitrile copolymers, isoprene-(meth)acrylonitrile copolymers, copolymers of butadiene with (meth)acrylonitrile and at least one monomer selected from itaconic acid, fumaric acid, (meth)acrylic acid and maleic acid, and AB, ABA and ABCBA block copolymers wherein A is butadiene or isoprene, B is styrene or $\alpha$- methylstyrene and C is a coupling agent residue, and from 30 to 99.95 percent of said carbon-carbon double bonds are hydrogenated.

**17.** The process claimed in any one of claims 1 to 16, wherein from 95 to 99.95 percent of said carbon-carbon double bonds are hydrogenated.

**Patentansprüche**

**1.** Verfahren zur selektiven Hydrierung der Kohlenstoff-Kohlenstoff-Doppelbindungen in einem Copolymer aus einem konjugierten Dien und wenigstens einem copolymerisierbaren Monomer, dadurch gekennzeichnet, daß die Hydrierung in Gegenwart von wenigstens einem Katalysator mit zweiwertigem Ruthenium der allgemeinen Formel:

$RuXY(CO)ZL_2$ -(1),

oder

$RuX(NO)(CO)L_2$ -(2)

durchgeführt wird, worin X ein Halogenatom oder eine Carboxylatgruppe ist, Y ein Halogenatom, ein Wasserstoffatom, eine Phenylgruppe, eine Carboxylatgruppe oder eine Phenylvinylgruppe ist, Z CO, Pyridin, Benzonitril, Trimethylphosphit oder kein Ligand ist und L ein Phosphinligand mit wenigstens einem sperrigen Alkylsubstituenten ist, wobei der Ausdruck "sperriger Alkylsubstituent" in bezug auf Phosphine Substituenten bedeutet, die bewirken, daß der Kegelwinkel des Phosphins wenigstens 160° beträgt.

**2.** Verfahren gemäß Anspruch 1, wobei X ein Chlor- oder ein Bromatom oder eine Carboxylatgruppe der Formel $R_4COO^-$ ist, wobei $R_4$ aus Alkyl- und Arylgruppen ausgewählt ist.

**3.** Verfahren gemäß Anspruch 2, wobei X ein Chloratom oder eine Carboxylatgruppe, bei der es sich um ein unsubstituiertes Acetat, mono-, di- und trihalogensubstituiertes Acetat, unsubstituiertes Benzoat, alkylsubstituiertes Benzoat oder halogensubstituiertes Benzoat handelt, ist.

4. Verfahren gemäß einem der Ansprüche 1 bis 3, wobei es sich bei den Carboxylatgruppen um $ClCH_2COO^-$, $Cl_2CHCOO^-$, $F_3CCOO^-$, $CH_3COO^-$, $C_6H_5COO^-$, p-$CH_3C_6H_4COO^-$ oder p-$ClC_6H_4COO^-$ handelt.

5. Verfahren gemäß einem der Ansprüche 1 bis 4, wobei Y ein Chloratom, ein Wasserstoffatom, eine Phenylgruppe oder eine $R_4COO^-$-Gruppe, in der $R_4$ aus Alkyl- und Arylgruppen ausgewählt ist, ist.

6. Verfahren gemäß einem der Ansprüche 1 bis 5, wobei L ein Phosphinligand der Formel -$PR_1R_2R_3$ ist, in dem wenigstens eine der Gruppen $R_1$, $R_2$ und $R_3$ eine sperrige Alkylgruppe ist.

7. Verfahren gemäß Anspruch 6, wobei jede der Gruppen $R_1$, $R_2$ und $R_3$ eine sperrige Alkylgruppe ist.

8. Verfahren gemäß Anspruch 6 oder 7, wobei die sperrige Alkylgruppe aus Cyclohexyl, Isopropyl, tert-Butyl, sec-Butyl und Benzyl ausgewählt ist.

9. Verfahren gemäß einem der Ansprüche 1 bis 8, wobei der Rutheniumkatalysator ausgewählt ist aus Carbonylchlorohydridobis(tricyclohexylphosphin)ruthenium(II), Carbonylchlorohydridopyridylbis-(tricyclohexylphosphin)ruthenium(II), Carbonylchlorohydridobenzonitrilbis(tricyclohexylphosphin)-ruthenium(II), Carbonylchlorohydridotrimethylphosphitbis(tricyclohexylphosphin)ruthenium(II)-,Carbonylacetatohydridobis(tricyclohexylphosphin)ruthenium(II), Carbonylchloracetatohydridobis-(tricyclohexylphosphin)ruthenium(II), Carbonylbenzoatohydridobis(tricyclohexylphosphin)ruthenium(II), Carbonyldichlorobis(tricyclohexylphosphin)ruthenium(II), Carbonylchloro(phenylvinyl)bis-(tricyclohexylphosphin)ruthenium(II), Biscarbonylchlorohydridobis(tricyclohexylphosphin)ruthenium(II), Carbonylchlorohydridobis(triisopropylphosphin)ruthenium(II), Carbonylacetatohydridobis-(triisopropylphosphin)ruthenium(II), Carbonylchlorobenzoatobis(tricyclohexylphosphin)ruthenium(II), Carbonylchlorophenylbis(tricyclohexylphosphin)ruthenium(II) und Carbonylchloronitrosylbis-(tricyclohexylphosphin)ruthenium(II).

10. Verfahren gemäß einem der Ansprüche 1 bis 9, wobei die Hydrierung bei einem angelegten Wasserstoffdruck von 0,5 bis 10 MPa bei einer Temperatur von 80° bis 200°C durchgeführt wird.

11. Verfahren gemäß Anspruch 10, wobei der Druck 2,5 bis 7,0 MPa beträgt und die Temperatur 110° bis 160°C beträgt.

12. Verfahren gemäß einem der Ansprüche 1 bis 11, das in einem Lösungsmittel durchgeführt wird, bei dem es sich um Chlorbenzol, o-Dichlorbenzol, Benzol, Toluol, 2-Butanon oder Aceton handelt.

13. Verfahren gemäß einem der Ansprüche 1 bis 11, das in einem Lösungsmittel durchgeführt wird, das ein Gemisch aus einem Keton mit niedrigem Molekulargewicht und einem Kohlenwasserstofflösungsmittel umfaßt.

14. Verfahren gemäß Anspruch 13, wobei das Lösungsmittelgemisch ein Gemisch aus Methylethylketon und Chlorbenzol in einem Volumenverhältnis von etwa 1:10 bis etwa 10:1 umfaßt.

15. Verfahren gemäß einem der Ansprüche 1 bis 14, das in einem Lösungsmittel bei einer Katalysatorkonzentration von 0,02 bis 2 Gew.-% des Copolymers und bei einer Copolymerkonzentration von 1 bis 30 Gew.-% durchgeführt wird.

16. Verfahren gemäß einem der Ansprüche 1 bis 15, wobei das Copolymer aus der Gruppe ausgewählt ist, bestehend aus Butadien/(Meth)acrylnitril-Copolymeren, Isopren/(Meth)acrylnitril-Copolymeren, Copolymeren von Butadien mit (Meth)acrylnitril und wenigstens einem Monomer, das aus Itaconsäure, Fumarsäure, (Meth)acrylsäure und Maleinsäure ausgewählt ist, sowie AB-, ABA- und ABCBA-Blockcopolymeren, wobei A Butadien oder Isopren ist, B Styrol oder $\alpha$-Methylstyrol ist und C der Rest eines Kopplungsreagenzes ist, und 30 bis 99,95% der Kohlenstoff-Kohlenstoff-Doppelbindungen hydriert werden.

17. Verfahren gemäß einem der Ansprüche 1 bis 16, wobei 95 bis 99,95% der Kohlenstoff-Kohlenstoff-Doppelbindungen hydriert werden.

## Revendications

1. Procédé pour l'hydrogénation sélective des doubles liaisons carbone-carbone dans un copolymère d'un diène conjugué avec au moins un monomère copolymérisable, caractérisé par la conduite de ladite hydrogénation en présence d'au moins un catalyseur au ruthénium divalent, de formule générale :

   $RuXY(CO)ZL_2$ -(1)

   ou

   $RuX(NO)(CO)L_2$ -(2)

   dans laquelle X représente un atome d'halogène ou un groupe carboxylate, Y représente un atome d'halogène, un atome d'hydrogène, un groupe phényle, un groupe carboxylate ou un groupe phénylvinyle, Z représente un groupe CO, pyridine, benzonitrile, triméthylphosphite ou l'absence de ligand, et L représente un ligand phosphine portant au moins un substituant alkyle volumineux, l'expression "substituant alkyle volumineux" désignant, en rapport avec des phosphines, des substituants qui engendrent un angle du cône de phosphine d'au moins 160°.

2. Procédé suivant la revendication 1, dans lequel X représente un atome de chlore ou de brome ou un groupe carboxylate de formule $R_4COO$- dans laquelle $R_4$ est choisi entre des groupes alkyle et des groupes aryle.

3. Procédé suivant la revendication 2, dans lequel X représente un atome de chlore ou un groupe carboxylate qui est un acétate non substitué, un acétate mono-, di- ou trisubstitué avec un halogène, un benzoate non substitué, un benzoate à substituant alkyle ou un benzoate à substituant halogéno.

4. Procédé suivant l'une quelconque des revendications 1 à 3, dans lequel les groupes carboxylate sont des groupes $ClCH_2COO$-, $Cl_2CCHCOO$-, $F_3CCOO$-, $CH_3COO$-, $C_6H_5COO$-,p-$CH_3C_6H_4COO$- ou p-$ClC_6H_4COO$-.

5. Procédé suivant l'une quelconque des revendications 1 à 4, dans lequel Y représente un atome de chlore, un atome d'hydrogène, un groupe phényle ou un groupe $R_4COO$-dans lequel $R_4$ est choisi entre des groupes alkyle et des groupes aryle.

6. Procédé suivant l'une quelconque des revendications 1 à 5, dans lequel L représente un ligand phosphine de formule -$PR_1R_2R_3$ dans laquelle au moins un des groupes $R_1$, $R_2$ et $R_3$ est un groupe alkyle volumineux.

7. Procédé suivant la revendication 6, dans lequel chacun des groupes $R_1$, $R_2$ et $R_3$ est un groupe alkyle volumineux.

8. Procédé suivant la revendication 6 ou 7, dans lequel le groupe alkyle volumineux est choisi entre les groupes cyclohexyle, isopropyle, tertiobutyle, sec.-butyle et benzyle.

9. Procédé suivant l'une quelconque des revendications 1 à 8, dans lequel le catalyseur au ruthénium est choisi entre le carbonylchlorohydrido-bis(tricyclohexylphosphine)ruthénium (II), le carbonylchlorohydridopyridylbis(tricyclohexylphosphine)ruthénium (II), le carbonylchlorohydridobenzonitrile-bis(tricyclohexylphosphine)ruthénium (II), le carbonylchlorohydridotriméthylphosphite-bis-(tricyclohexylphosphine)ruthénium (II), le carbonylacétatohydrido-bis(tricyclohexylphosphine)ruthénium (II), le carbonylchloroacétatohydrido-bis(tricyclohexylphosphine)ruthénium (II), le carbonylbenzoatohydrido-bis(tricyclohexylphosphine)ruthénium (II), le carbonyldichlorobis(tricyclohexylphosphine)ruthénium (II), le carbonylchloro(phénylvinyl)-bis(tricyclohexylphosphine)ruthénium (II), le biscarbonylchlorohydrido-bis(tricyclohexylphosphine)ruthénium (II), le carbonylchlorohydridobis(tri-isopropylphosphine)-ruthénium (II), le carbonylacétatohydrido-bis(tri-isopropylphosphine)ruthénium (II), le carbonylchlorobenzoato-bis(tricyclohexylphosphine)ruthénium (II), le carbonylchlorophényl-bis(tricyclohexylphosphine)-ruthénium (II) et le carbonylchloronitrosyl-bis(tricyclohexylphosphine)ruthénium (II).

**10.** Procédé suivant l'une quelconque des revendications 1 à 9, dans lequel l'hydrogénation est effectuée sous une pression d'hydrogène appliquée de 0,5 à 10 MPa à une température de 80° à 200°C.

**11.** Procédé suivant la revendication 10, dans lequel la pression est comprise dans l'intervalle de 2,5 à 7,0 MPa et la température est comprise dans l'intervalle de 110° à 160°C.

**12.** Procédé suivant l'une quelconque des revendications 1 à 11, mis en oeuvre dans un solvant qui est le chlorobenzène, le o-dichlorobenzène, le benzène, le toluène, la 2-butanone ou l'acétone.

**13.** Procédé suivant l'une quelconque des revendications 1 à 11, mis en oeuvre dans un solvant consistant en un mélange d'une cétone de bas poids moléculaire et d'un solvant hydrocarboné.

**14.** Procédé suivant la revendication 13, dans lequel le mélange de solvants consiste en un mélange de méthyléthylcétone et de chlorobenzène en un rapport volumique d'environ 1:10 à environ 10:1.

**15.** Procédé suivant l'une quelconque des revendications 1 à 14, mis en oeuvre dans un solvant à une concentration de catalyseurs de 0,02 à 2 % en poids de copolymère et à une concentration de copolymères de 1 à 30 % en poids.

**16.** Procédé suivant l'une quelconque des revendications 1 à 15, dans lequel le copolymère est choisi dans le groupe consistant en copolymères butadiène-(méth)-acrylonitrile, copolymères isoprène-(méth)-acrylonitrile, copolymères de butadiène avec le (méth)-acrylonitrile et au moins un monomère choisi entre l'acide itaconique, l'acide fumarique, l'acide (méth)acrylique et l'acide maléique, et copolymères séquencés AB, ABA et ABCBA dans lesquels A représente le butadiène ou l'isoprène, B représente le styrène ou l'α-méthylstyrène et C représente un résidu d'agent de couplage, et 30 à 99,95 pour cent des doubles liaisons carbone-carbone sont hydrogénés.

**17.** Procédé suivant l'une quelconque des revendications 1 à 16, dans lequel 95 à 99,95 pour cent des doubles liaisons carbone-carbone sont hydrogénés.